# EUROPEAN PATENT SPECIFICATION

(11) **EP 1 629 646 B1**
(45) Date of publication and mention of the grant of the patent: **29.10.2008**
(21) Application number: 04776209.1
(22) Date of filing: 28.05.2004
(51) Int. Cl.: H04L 12/56

(54) **METHOD AND APPARATUS FOR CONTROLLING A BROADCAST COMMUNICATION DATA RATE IN A WIRELESS COMMUNICATION SYSTEM**
VERFAHREN UND VORRICHTUNG ZUM STEUERN EINER RUNDSTRAHLKOMMUNIKATIONSDATENRATE IN EINEM DRAHTLOSKOMMUNIKATIONSSYSTEM
PROCEDE ET APPAREIL PERMETTANT DE REGLER LE DEBIT DE DONNEES DE TRANSMISSIONS DE DIFFUSION DANS UN SYSTEME DE TELECOMMUNICATION SANS FIL

(30) Priority: 03.06.2003 US 454062
(43) Date of publication of application: 01.03.2006
(73) Proprietor: Qualcomm, Incorporated, San Diego, CA 92121-1714 (US)
(72) Inventor: CANOY, Michael-David, N., San Diego, CA 92121 (US)
(74) Representative: Gates, Marie Christina Esther
(86) International application number: PCT/US2004/017164
(87) International publication number: WO 2004/112330

(56) References cited:
- EP-A- 1 248 480
- EP-A- 1 359 782
- WO-A-03/030460
- US-B1- 6 360 076
- AGASHE P: "CDMA2000 High rate broadcast packet data air interface simulation results" 3GPP2 TSG-C CDMA200 MEETING, XX, XX, 9 July 2002 (2002-07-09), page 9, XP002273381

## Description

### BACKGROUND

### Field

The present invention relates generally to communication systems, and, more specifically, to a method and apparatus for controlling a communication data rate of a broadcast channel in a wireless communication system.

### Background

Broadcast services provide point-to-multipoint communication service in a wireless communication system between at least one base transceiver site and a plurality of access terminals that receive the broadcast data within the communication coverage area of the base transceiver site. The broadcast data *(i*.*e*., content) transmitted by the base transceiver site to the plurality of access terminals may include, but need not be necessarily limited to, news, movies, sporting events, and the like. The content is typically generated by a content server and is broadcast to the access terminals at a single data rate over a broadcast channel of the forward link to the access terminals within its coverage area.

Typically, the further the access terminals are located from the base transceiver site, the lower the data rate the access terminal may typically accommodate over the forward broadcast link. Conversely, when access terminals are located within close proximity to the base transceiver site, they can typically accommodate a higher data rate to receive the content broadcast therefrom. Consequently, the higher data rates that could be realized by these higher data rate access terminals is limited due to the base transceiver site typically broadcasting the content using the lowest data rate that may be accommodated by all of the access terminals residing within its coverage area.

As a result of the higher data rate capable access terminals receiving the content at a much lower data rate, a significant portion of communication resources (*e*.*g*., slots of the broadcast channel) are inefficiently utilized on the higher data rate capable terminals by accommodating the lowest data rate needed to transmit the content to the lower data rate access terminals.

The present invention is directed to overcoming, or at least reducing the effects of, one or more problems indicated above.

US Patent No. US 6,360,076, assigned to LM Ericsson, discloses a method in a radio telecommunications network of broadcasting data in an over the air multicast to a group of mobile terminals. The broadcast base station transmits a test packet with defined maximum and minimum transmission quality and terminals that experience a transmission quality within this interval respond. If no terminal responds within a set threshold, the base station can lower the minimum transmission quality.

### SUMMARY

The present invention is defined by the appended claims.

In one aspect of the invention, a method for communication of broadcast data from a transmitter to a plurality of terminals in a communication system according to claim 1 is provided.

In another aspect of the invention, an apparatus for communication of broadcast data from a transmitter to a plurality of terminals in a communication system according to claim 8 is provided.

In another aspect of the present invention, a wireless communication system according to claim 15 is provided.

### BRIEF DESCRIPTION OF THE DRAWINGS

FIG. 1 is a block diagram of a wireless communication system employing a broadcast data rate controller in accordance with one illustrative embodiment of the present invention;

FIG. 2 shows a more detailed representation of a particular coverage area of the wireless communication system of FIG.1 in accordance with one embodiment of the present invention;

FIG. 3 is a more detailed representation of the broadcast data rate controller of Figure 1 according to one embodiment of the present invention; and

FIGS. 4A and 4B show a flowchart of a process for controlling the data rate of a broadcast channel in a wireless communication system in accordance with one embodiment of the present invention.

### DETAILED DESCRIPTION

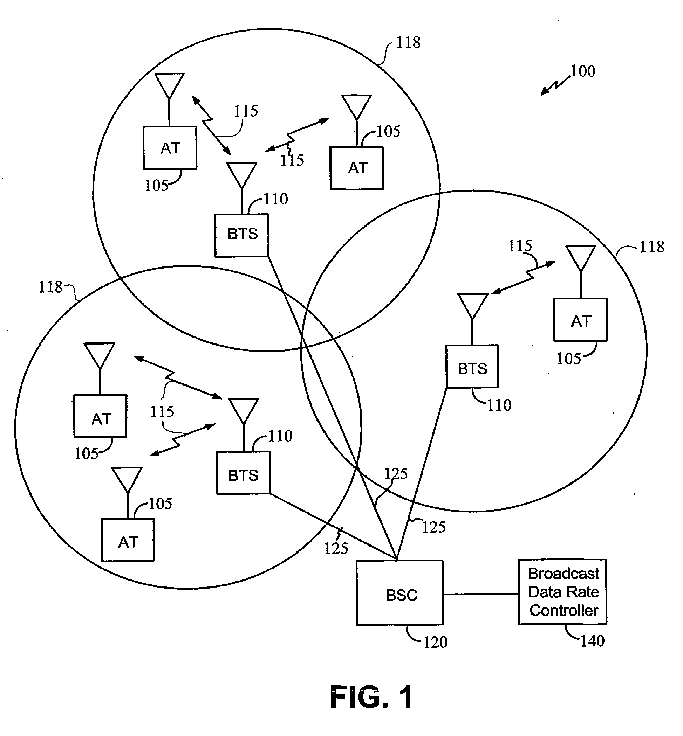

Turning now to the drawings, and specifically referring to FIG. 1, a wireless communication system 100 is shown in accordance with one illustrative embodiment of the present invention. The wireless communication system 100 comprises a plurality of access terminals (AT) 105 that communicate with a plurality of base transceiver sites (BTS) 110, which are geographically dispersed to provide continuous communication coverage with the access terminals 105 as they traverse the wireless communication system 100.

According to the illustrated embodiment, the wireless communication system 100 takes the form of a broadcast wireless communication system providing a High-Speed Broadcast Service (HSBS), for example. In this particular embodiment, the plurality of base transceiver sites (BTS) 110 transmit content such as, for example, news, movies, sporting events, and the like over a wireless communication channel 115 to the access terminals 105. It will be appreciated that the specific type of content transmitted to the access terminals 105 may include a wide array of different types of information, and, thus, need not necessarily be limited by the aforementioned examples.

Each base transceiver site 110 is coupled to a base station controller (BSC) 120, which may switch communication for the access terminals 105 as they traverse from a communication coverage area 118 of one base transceiver site 110 to another. It will be appreciated that the coverage areas 118 for each base transceiver site 110 may also be subdivided into a plurality of sectors (not shown), and communication with the access terminals 105 may be switched from one sector to another sector of the same base transceiver site 110 using one of a plurality of handoff schemes that are well known to those of ordinary skill in the art. Furthermore, it will also be appreciated that communication may be switched from one sector of one base transceiver site 110 to another sector of another base transceiver site 110.

The base transceiver sites 110 are coupled to the base station controller 120 by communication links 125. In accordance with one embodiment, the communication links 125 coupling the base transceiver sites 110 to the base station controller 120 may take the form of a wireline E1 or T1 link. It will be appreciated, however, that the communication links 125 may alternatively be embodied using any one of a number of wired or wireless communication mediums including, but not necessarily limited to, microwave, optical fiber, and the like. The base station controller 120 may also be coupled to a broadcast packet data serving node (BPDSN) (not shown) for interfacing the wireless communication system 100 to a content server (not shown), which may generate content to be broadcast from the base transceiver sites 110 to the access terminals 105. It will be appreciated that the base station controller 120 may also be coupled to various other types of networks, such as a public switched telephone network (PSTN), a packed data serving node (PDSN), etc. to extend the communication capabilities of the wireless communication system 100.

The base transceiver sites 110 and the base station controller 120 collectively form an "access network" (AN) of the wireless communication system 100 for transporting the broadcast data packets to the plurality of access terminals 105 that communicate within the wireless communication system 100. It will be appreciated that the number of access terminals 105, base transceiver sites 110, and base station controllers 120 that collectively form the wireless communication system 100 may vary, and, thus, need not necessarily be limited to the particular number of access network components (*i*.*e*., base transceiver sites 110, base station controllers 120, *etc*.) illustrated in FIG. 1.

In one embodiment of the present invention, the wireless communication channel 115, which communicatively interfaces the base transceiver site 110 to the access terminal 105, takes the form of a radio frequency (RF) link. In one embodiment, the base transceiver sites 110 and the access terminals 105 operate in accordance with a code division multiple access (CDMA) scheme. It will be appreciated, however, that the wireless communication system 100 may employ various other multiple access schemes, such as time division multiple access (TDMA), frequency division multiple access (FDMA), and the like.

According to one embodiment, the wireless communication channel 115 comprises a forward link (FL) for broadcasting the content from the plurality of base transceiver sites 110 to the access terminals 105 over a broadcast channel and a reverse link (RL) for transmitting data from the access terminals 105 to the base transceiver sites 110. In one embodiment, the reverse link includes a signaling traffic channel and a data rate control (DRC) channel. The data rate control (DRC) channel of the reverse link may be used via a data rate request to indicate to the wireless communication system 100 a supportable broadcast data rate that may be used to broadcast the content over the broadcast channel of the forward link.

According to the illustrated embodiment, the wireless communication system 100 further comprises a broadcast data rate controller 140 to dynamically alter or change the broadcast communication data rate for the content transmitted over the forward link of the wireless communication channel 115 to the access terminals 105 of the wireless communication system 100. The manner in which the broadcast data rate controller 140 dynamically changes the data rate of the broadcast channel over the forward link will be appreciated as the detailed description proceeds.

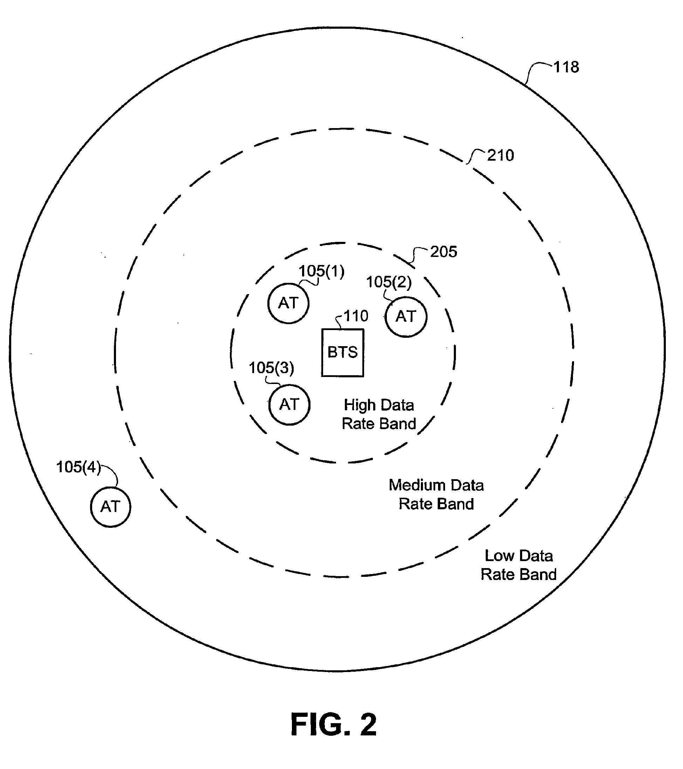

Turning now to FIG. 2, a base transceiver site 110 of the wireless communication system 100, which serves a plurality of access terminals 105(1)-(4) communicating therewith, is shown in accordance with one illustrative embodiment of the present invention. The base transceiver site 110 broadcasts data to the plurality of access terminals 105 located within its coverage area 118 over the forward link of the wireless communication channel 115. Typically, the closer the access terminals 105 are physically located to the base transceiver site 110, the higher the data rate the access terminal 105 may accommodate over the broadcast channel of the forward link. Conversely, the further the access terminals 105 are located from the base transceiver site 110, the lower the data rate the access terminal 105 may typically accommodate over the forward link. Of course, it will be appreciated that this assumes an ideal model in wireless communication transmission phenomenon. That is, certain physical boundaries (e.g., buildings or other man-made objects) and/or natural geographical characteristics of the terrain (such as hills, mountains, forests *etc*.) may cause wireless transmission anomalies within the wireless communication system 100. Accordingiy, in some instances, an access terminal 105 that is located geographically closer to the base transceiver site 110 may need to receive broadcast data using a lower communication data rate than another access terminal 105 (located further from the base transceiver site 110) because its reception capabilities may be deteriorated as a result of these wireless transmission anomalies.

Assuming an ideal wireless transmission model in the exemplary illustration of FIG. 2, the access terminals 105(1), (2), and (3) that are located within the boundary 205 of the coverage area 118 (*i*.*e*., in a "high" data rate band) may be able to support a communication data rate of approximately 614 kbps, for example. Access terminals 105 that are located between the boundary 205 and the boundary 210 may be able to support a data rate of approximately 307 kbps (*i*.*e*., in a "medium" data rate band), and the access terminals 105 that are located outside the boundary 210 may accommodate a data rate of approximately 153 kbps (*i*.*e*., in a "low" data rate band). It will be appreciated that the particular communication data rates provided herein are for exemplary purposes only. Accordingly, the communication data rates provided by a particular base transceiver site 110 may vary from the aforementioned examples. Moreover, it will be appreciated that the actual formation of these data rate bands within the coverage area 118 is merely for illustration purposes only. That is, the access terminals 105 that are located within close proximity to the base transceiver site 110 may typically support a higher data rate than those access terminals 105 that are located at a further distance from the base transceiver site 110. As previously mentioned, however, wireless transmission anomalies (due to certain man-made and/or natural obstacles, for example) may exist within the wireless communication system 100, wherein it is conceivable that an access terminal 105 that is located at a further distance from the base transceiver site 110 may be able to support a higher data rate than an access terminal 105 that is located closer to the base transceiver site 110.

The base transceiver site 110 transmits the broadcast data at a single rate over the broadcast channel of the forward link to the access terminals 105 within its coverage area 118. For example, even though access terminals 105(1), (2), and (3) may typically accept a higher data rate than the access terminal 105(4) (due to their closer proximity to the base transceiver site 110), all the data that is broadcast from the base transceiver site 110 is transmitted over the broadcast channel at the lower data rate of 153 kbps (in the exemplary embodiment) such that the access terminal 105(4) in the "low" data rate band of the coverage area 118 may also receive the broadcast data. Thus, even though the access terminals 105(1), (2), and (3) may be able to accept a higher data rate (*i*.*e*., 614 kbps) because they reside within the "high" data rate band, all the data broadcast from the base transceiver site 110 is transmitted at the lower data rate (*i*.*e*., 153 kbps) such that the access terminal 105(4) of the "low" data rate band may also be capable of receiving the broadcast data from the base transceiver site 110. As a result of receiving the broadcast data at the lower data rate, more slots than necessary in the broadcast channel of the forward link are typically used to transit the broadcast data to the access terminals 105(1), (2), and (3) located within the "high" data rate band of the coverage area 118. Accordingly, by accommodating the slower broadcast data rate for the access terminal 105(4) in the "low" data rate band to receive the broadcast data, the base transceiver site 110 would not be efficiently transmitting the broadcast data to the access terminals 105(1), (2), and (3) as these terminals may accommodate a higher data rate from the base transceiver site 110.

In accordance with one illustrated embodiment of the present invention, the data rate of the broadcast channel for the base transceiver site 110 may be dynamically altered or changed by the broadcast data rate controller 140 to accommodate a select set of access terminals 105 within the coverage area 118 of a particular base transceiver site 110 to optimize the communication resources allocated to that base transceiver site 110. In other words, a particular number or percentage of the access terminals 105 in the coverage area 118 may be excluded from receiving the broadcast data to optimize the communication performance of the remaining access terminals 105. For example, in the exemplary illustration of Figure 2, there are three access terminals 105 (*i*.*e*., access terminals 105(1), (2) and (3)) that are located within the "high" data rate boundary 205 of the coverage area 118, and may theoretically accept a data rate of 614 kbps or lower. The other remaining access terminal 105(4) is located within the "low" data rate band outside of the boundary 210 of the coverage area 118, and may theoretically accept a data rate of 153 kbps or lower. Because seventy-five percent of the access terminals 105 communicating within the coverage area 118 may accept a data rate of at least 614 kbps in the exemplary embodiment, it may be desirable to adjust the broadcast channel data rate for the base transceiver site 110 to 614 kbps to accommodate the select set of the three access terminals 105(1), (2), and (3) (and, thus exclude the access terminal 105(4)), thereby optimizing the communication resources allocated to the access terminals 105(1), (2), and (3) residing within the "high" data rate band of the coverage area 118. The predefined conditions determining whether to raise or lower the data rate of the broadcast channel of the base transceiver site 110 may be based on a variety of factors. For example, the predefined condition or conditions for raising or lowering the communication data rate of the broadcast channel may be based upon a certain minimum percentage (*e*.*g*., seventy, eighty, eighty-six percent, *etc*.) of the number of access terminals 105 being able to accommodate (*i*.*e*., receive the broadcast data at) a particular data rate. Or, alternatively, the predefined condition may be based upon a certain number or percentage of the access terminals 105 being unable to receive the broadcast data at a particular data rate. In the example provided in FIG. 2, seventy-five percent of the access terminals 105 communicating within the coverage area 118 are within the "high" data rate band (*i*.*e*., inside the boundary 205 of the coverage area 118) that may accommodate a communication data rate of 614 kbps or lower. And, twenty-five percent of the access terminals 105 (*i*.*e*., access terminal 105(4) may not be able to receive broadcast data at 614 kbps). Accordingly, because there is a higher concentration of access terminals 105 communicating within the "high" data rate band of the coverage area 118, it may be more desirable to increase the broadcast data rate of the base transceiver site 110 to accommodate seventy-five percent of the access terminals 105 within the coverage area 118, thereby more efficiently utilizing the communication resources allocated to those access terminals 105 (*i*.*e*., access terminals 105(1), (2), and (3)) that are located within the "high" data rate band.

It will be appreciated that the predefined condition(s) may vary from the aforementioned example. That is, if a certain percentage (such as eighty percent, for example) of the access terminals 105 reside within the "low" data rate band outside the boundary 210 of the coverage area 118, then the broadcast data rate of the base transceiver site 110 may be lowered to accommodate the higher percentage of access terminals 105 residing in the "low" data rate band. It will further be appreciated that the number or percentage of access terminals 105, which are able to accept a particular broadcast data rate, may be dynamically adjusted by the broadcast data rate controller 140 to account for the potential movement of the access terminals 105 within the coverage area 118 or to the coverage area of another base transceiver site 110. For example, at a later point in time, the access terminals 105(1) and 105(3) may migrate from the "high" data rate band to the "low" data rate band. In this particular scenario; seventy-five percent of the access terminals 105 would now reside in the "low" data rate band, and, thus, it may be more desirable for the broadcast data rate controller 140 to lower the broadcast data rate from the higher rate of 614 kbps to the lower rate of 153 kbps to accommodate the large portion of access terminals 105 that now reside within the "low" data rate band.

In an alternative embodiment, a priority factor may be assigned to each or some of the access terminals 105 of the wireless communication system 100 such that the broadcast data rate controller 140 may take into consideration an access terminal 105's assigned priority factor before determining whether to raise or lower the broadcast data rate of the base transceiver site 110. In the exemplary embodiment of FIG. 2, for instance, the access terminal 105(4) located within the "low" data rate band may have a pre-assigned priority factor that is higher than those of the access terminals 105(1), (2), and (3). Accordingly, in this particular example, the priority factor assigned to the access terminal 105(4) may carry enough weight to cause the broadcast data rate controller 140 to keep the broadcast communication data rate of the base transceiver site 110 to the "low" data rate (*i*.*e*., 153 kbps) even though seventy-five percent of the access terminals being served by the base transceiver site 110 may accommodate a "high" data rate (*i*.*e*., 614 kbps) as shown in FIG. 2. It will be appreciated that a variety of criteria may be used by the broadcast data rate controller 140 to determine whether to increase or decrease the broadcast data rate of a particular base transceiver site 110, and, thus need not necessarily be limited by the aforementioned examples.

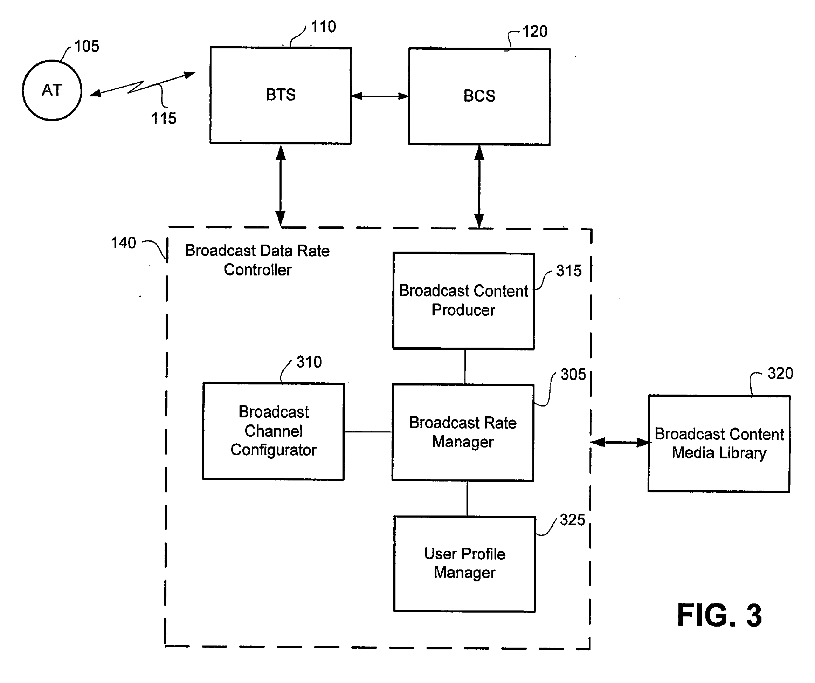

Turning now to Figure 3, a more detailed representation of the broadcast data rate controller 140 is shown in accordance with one embodiment of the present invention. According to the illustrated embodiment, the broadcast data rate controller 140 comprises a broadcast rate manager 305 for determining whether the broadcast data rate for each of the base transceiver sites 110 within the wireless communication system 100 should be increased, decreased, or remain the same based on one or more predefined conditions. For example, in one embodiment, the predefined condition(s) may be that a certain percentage of the access terminals 105 communicating with a particular base transceiver site 110 may be able to accommodate a particular data rate of the broadcast channel of the forward link. In accordance with one embodiment, the broadcast rate manager 305 may determine whether to increase or decrease the data rate of the broadcast channel for a particular base transceiver site 110 based on current rate samples that are received from the access terminals 105 that are communicating within the coverage area 118 of the particular base transceiver site 110.

In accordance with the illustrated embodiment of the present invention, each access terminal 105 generates a sample of its current broadcast reception capabilities in response to a data rate request, and sends the sample over the reverse link of the wireless communication channel 115 to the base transceiver site 110 that is currently serving the access terminal 105. In one embodiment, if the access terminal 105 is engaged in "traffic" (*i*.*e*., actively communicating with the base transceiver site 110), the access terminal 105 receives a broadcast logical channel embedded in the forward link of the wireless communication channel 115. In response to receiving the broadcast logical channel over the forward link, the access terminal 105 sends a registration message for the logical channel over a traffic channel on the reverse link of the wireless communication channel 115. While sending the registration message on the reverse link, the access terminal 105 generates DRCs (data rate control), which indicate the maximum data rate that the access terminal 105 may accommodate over the broadcast channel from the base transceiver site 110.

In accordance with another embodiment of the present invention, if the access terminal 105 is not engaged in communication with one of the base transceiver sites 110 of the wireless communication system 100 (*i*.*e*., the access terminal 105 is not engaged in "traffic"), the base transceiver site 110 may then send a "wake-up" signal to the access terminal 105 over a broadcast logical channel of the forward link. Upon receiving the wake-up signal from the base transceiver site 110 over the forward link, the access terminal 105 may open a traffic channel on the reverse link, and send a signaling message that includes channel information that is indicative of the data rate that may be sustained by the access terminal 105 over the broadcast channel. In one embodiment of the present invention, the channel information may include data rate control (DRC) information as previously discussed. It will be appreciated, however, that the channel information may alternatively include a signal-to-noise ratio (SinR), a carrier-to-interference ratio (C/I), global positioning satellite (GPS) data providing the geographical location of the access terminal 105 relative to the base transceiver site 110, and the like without departing from the spirit and scope of the present invention.

Upon receiving the rate samples from the access terminals 105 within the coverage area of a particular base transceiver site 110, the broadcast rate manager 305 obtains the current data rate for the broadcast channel of the particular base transceiver site 110 from a broadcast channel configurator 310. The broadcast rate manager 305 determines whether the broadcast data rate for each of the base transceiver sites 110 within the wireless communication system 100 should be increased, decreased, or remain the same based on one or more of the predefined conditions. For example, if a certain percentage (*e*.*g*., seventy-five percent or more) of the access terminals 105 communicating with the base transceiver site 110 may accommodate a higher broadcast data rate (*e*.*g*., 614 kbps) than the current data rate (*e*.*g*., 153 kbps) of the broadcast channel for that base transceiver site 110 provided by the broadcast channel configurator 310, then the broadcast data rate manager 305 may determine to increase the broadcast data rate of the base transceiver site 110 to accommodate the large percentage of the access terminals 105 that are able to communicate at the higher broadcast rate of 614 kbps, for example. As previously noted, however, the particular number or percentage of access terminals 105 that may accept the higher (or lower) data rate may vary, and, thus, need not necessarily be limited to the aforementioned example. Furthermore, the predefined condition(s) for determining whether to raise or lower a particular base transceiver site 110's broadcast data rate may vary as well.

Before determining whether to change the broadcast data rate for a particular base transceiver site 110, the broadcast rate manager 305 may also determine whether it is possible to encode the broadcast media content at the desired broadcast data rate. To make this determination, the broadcast data rate manager 305 instructs the broadcast content producer 315 to query a broadcast content media library 320 to determine whether or not it is possible to encode the broadcast media transmitted from the particular base transceiver site 110 at the desired broadcast data rate. In one embodiment, the maximum data rate that may be used for a particular broadcast media is stored within the broadcast media content library 320. If it is determined that the current broadcast media can support the broadcast data rate desired for a particular base transceiver site 110, the broadcast rate manager 305 sends a signal to the broadcast channel configurator 310 to adjust the broadcast data rate of the particular base transceiver site 110 to the new desired broadcast data rate. Upon receiving the signal from the broadcast rate manager 305, the broadcast channel configurator 310 sends a control signal to the particular base transceiver site 110, the base station controller 120 that is coupled to the particular base transceiver site 110, and to a broadcast content producer 315, which encodes the broadcast media at the new desired broadcast data rate that was instructed by the broadcast data rate manager 305.

In accordance with another embodiment of the present invention, the broadcast rate manager 305 may query a user profile manager 325, which may store a particular priority factor for each or some of the access terminals 105 of the wireless communication system 100. For example, a user associated with a particular access terminal 105, such as a CEO of a company, for example, may be considered more important for receiving certain broadcast data than other users of the wireless communication system 100. Accordingly, the user profile manager 325 may have stored therein a priority factor associated with each user of the wireless communication system 100 such that the broadcast rate manager 305 may use the priority factor for determining whether to raise or lower the data rate of the broadcast channel of a particular base transceiver site 110. For example, in one embodiment, the users' access terminals 105 of the wireless communication system 100 may each be assigned a priority factor of 1 to 5, with one being the highest priority and five being the lowest priority. In an alternative embodiment, a priority "flag" stored within the user profile manager 325 may indicate that a particular access terminal 105 or group of access terminals 105 has/have priority over other access terminals 105 within the wireless communication system 100 without a priority flag designation stored within the user profile manager 325. It will be appreciated, however, that the designation of a priority factor/flag or scale (*e*.*g*., 1 to 5) used to indicate such priority among the access terminals 105 within the wireless communication system 100 may vary, and, thus, need not necessarily be limited to the aforementioned examples.

Referring briefly back to the example of FIG. 2, if the user profile manager 325 has stored a priority factor of "1" for the access terminal 105(4), for example, and the access terminals 105(1), (2), and (3) each have a priority factor of "4," for example, then the broadcast rate manager 305 may determine that the broadcast data rate for the base transceiver site 110 should not be increased to the higher data transmission rate of 614 kbps. That is, because of its higher priority factor, it may be desirable to accommodate the lower rate of 153 kbps for the higher priority access terminal 105(4) despite the fact that seventy-five percent of the access terminals can accommodate the higher data rate of 614 kbps.

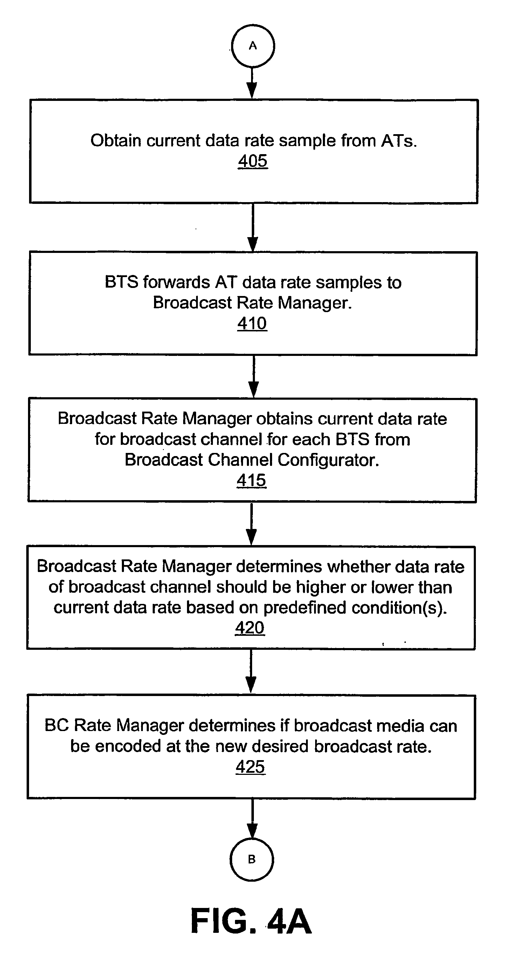

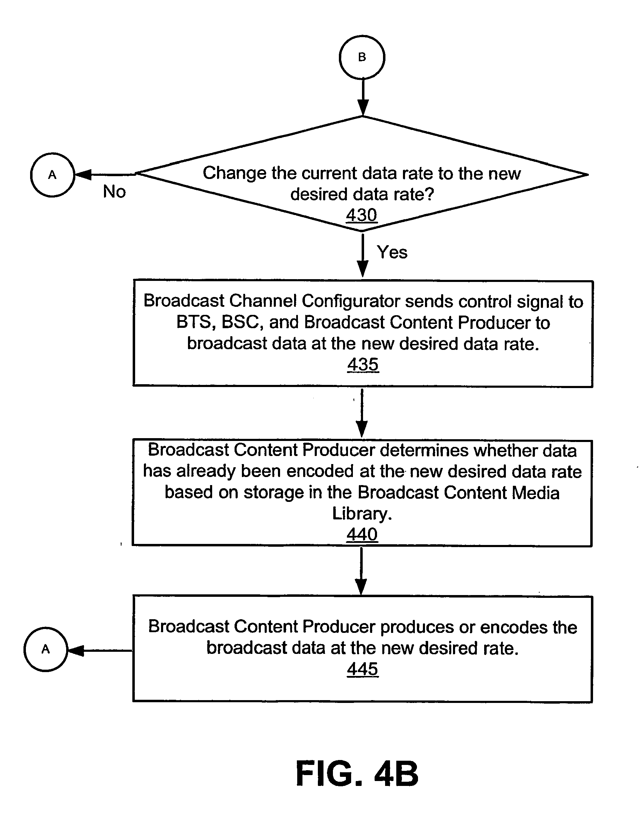

Turning now to FIG. 4, a process for controlling the data rate of a broadcast channel in the wireless communication system 100 is shown in accordance with one embodiment of the present invention. At block 405, each access terminal 105 generates a sample of its current broadcast reception capabilities, and sends the sample over the reverse link of the wireless communication channel 115 to the base transceiver site 110 that is currently serving the access terminal 105. In one embodiment, if the access terminal 105 is engaged in "traffic" (*i*.*e*., actively communicating with the base transceiver site 110), the access terminal 105 receives a broadcast logical channel embedded in the forward link of the wireless communication channel 115. In response to receiving the broadcast logical channel over the forward link, the access terminal 105 sends a registration message for the logical channel over a traffic channel on the reverse link of the wireless communication channel 115. While sending the registration message on the reverse link, the access terminal 105 generates DRCs (data rate control), which indicate the maximum data rate that the access terminal 105 may accommodate over the broadcast channel from the base transceiver site 110. In accordance with another embodiment of the present invention, if the access terminal 105 is not engaged in communication with one of the base transceiver sites 110 of the wireless communication system 100 (*i*.*e*., the access terminal 105 is not engaged in "traffic"), the base transceiver site 110 may then send a "wake-up" signal to the access terminal 105 over a broadcast logical channel of the forward link. Upon receiving the wake-up signal from the base transceiver site 110 over the forward link, the access terminal 105 may open a traffic channel on the reverse link, and send a signaling message that includes channel information that is indicative of the data rate that may be sustained by the access terminal 105. In one embodiment of the present invention, the channel information may include data rate control (DRC) information as previously discussed. It will be appreciated, however, that the channel information may alternatively include a signal-to-noise ratio (SinR), a carrier-to-interference ratio (C/I), global positioning satellite (GPS) data providing the geographical location of the access terminal 105 relative to the base transceiver site 110, and the like.

Upon receiving the broadcast data rate sample from the access terminal 105, the base transceiver site 110 forwards the sample for the particular access terminal 105 to the base station controller 120. The base station controller 120, after receiving the access terminal 105's broadcast data rate sample, sends the sample to the broadcast rate manager 305. The broadcast rate manager 305 collects the samples from the access terminals 105 communicating in the wireless communication system 100 at block 410.

In an alternative embodiment of the present invention, the base transceiver site 110 may send the samples from the access terminals 105 within its particular communication coverage area 118 directly to the broadcast rate manager 305 for collection thereby. Upon collecting the various broadcast data rate samples from the access terminals 105 that are served by a particular base transceiver site 110, the broadcast rate manager 305 queries the broadcast channel configurator 310 for the current data rate that is being used for the particular base transceiver site 110 on its broadcast channel at block 415.

At block 420, the broadcast rate manager 305 compares the current broadcast data rate for a particular base transceiver site 110 provided by the broadcast channel configurator 310 to the current broadcast data rate samples provided by the access terminals 105 communicating with the base transceiver site 110. Based on this comparison, the broadcast data rate manager 305 determines whether the broadcast data rate for a particular base transceiver site 110 should be higher or lower than the current broadcast data rate based on one or more predefined conditions. In accordance with one embodiment of the present invention, such a determination may result when a predetermined percentage or more of the access terminals 105 being served by a particular base transceiver site 110 may accommodate a higher broadcast data rate than the current broadcast data rate being used by the base transceiver site 110. In accordance with one embodiment of the present invention, the predetermined percentage of access terminals 105 that may accommodate the higher data rate may be seventy-five percent or more, for example. It will be appreciated, however, that the predetermined percentage of access terminals 105 may vary, and, thus, need not necessarily be limited to the aforementioned example. Additionally, the broadcast rate manager 305 may take into consideration the priority factors assigned to one or more of the access terminals 105 (stored within the user profile manager 325) for determining whether to raise or lower the data rate of the base transceiver site 110, as previously discussed.

At block 425, the broadcast rate manager 305 determines whether the broadcast content media may be encoded at the desired broadcast data rate providing that the broadcast rate manager 305 determined that the data rate for the broadcast channel of the particular base transceiver site 110 should be higher or lower than its current data rate. At block 430, broadcast rate manager 305 determines whether to change the broadcast data rate of the base transceiver site 110 to the desired broadcast data rate determined in block 420. If the broadcast rate manager 305 does not change the current data rate of the base transceiver site 110 to the desired rate because the content broadcast by the base transceiver site 110 cannot be encoded at the new desired rate (as determined in block 425), the process reverts back to block 405. If, however, the broadcast rate manager 305 changes the current data rate (i.e., a first data rate) of the base transceiver site 110 to the new desired data rate (i.e., a second data rate), the process continues to block 435, where the broadcast channel configurator 310 sends a control signal to the base transceiver site 110, base station controller 120, and the broadcast content producer 315 to broadcast the content at the new desired data rate (i.e., the second data rate).

At block 440, the broadcast content producer 315 determines whether the content being transmitted by the base transceiver site 110 has already been encoded at the new desired data rate based on the storage in the broadcast content media library 320. At block 445, the broadcast content producer 315 either produces or encodes the content at the new desired data rate (depending on whether the content was already encoded at the new desired rate and stored within the content media library 320) for transmission to the access terminals 105 by the base transceiver site 110.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments. Thus, the present invention is not intended to be limited to the embodiments shown herein but is to be accorded the widest scope consistent with the principles and novel features disclosed herein.

## Claims

1. A method for communication of broadcast data from a transmitter to a plurality of terminals in a communication system, comprising:
determining a maximum communication data rate for each of the plurality of terminals, the method being further **characterised by**:
selecting a broadcast communication data rate greater than a lowest value of the determined maximum communication data rates; and
transmitting the broadcast data at the selected broadcast communication data rate greater than the maximum communication data rate of at least one of the plurality of terminals, wherein said selecting the broadcast communication data rate greater than the lowest value of the determined maximum communication data rates excludes a predetermined percentage of the plurality of terminals from receiving the broadcast data.

2. The method of claim 1, further comprising:
repeating said determining the maximum communication data rate and said selecting the broadcast communication data rate periodically.

3. The method of claim 1, wherein said determining comprises:
obtaining a plurality of communication data rate requests from each of the plurality of terminals for the determining the maximum communication data rate.

4. The method of claim 1, further comprising:
determining if at least one of the plurality of terminals in the predetermined percentage of terminals has an indicator associated therewith that indicates a higher priority that one terminal has with respect to the plurality of terminals; and
transmitting the broadcast data at the lowest value of the determined maximum data communication rates.

5. The method of Claim 1 further comprising:
transmitting data at a first communication data rate to the plurality of terminals;
determining a second communication data rate for the transmitter, said second communication data rate being selected so that a predetermined number of the plurality of terminals are excluded from receiving the data from the transmitter at the second communication data rate; and
transmitting the data at the second communication data rate.

6. The method of claim 5, further comprising:
obtaining a plurality of communication data rate requests from each of the plurality of terminals, said communication data rate requests each respectively indicating a maximum communication data rate in which the terminals are able to receive data from the transmitter; and
selecting the second communication data rate based at least in part upon the plurality of communication data rate requests obtained from each of the plurality of terminals.

7. The method of claim 5, further comprising:
assigning an indicator to at least one of the plurality of terminals, said indicator indicating a priority that one terminal has with respect to the plurality of terminals; and
transmitting the data to the plurality of terminals using said first communication data rate providing that at least one terminal is unable to receive the data at the second communication data rate and has an assigned indicator with a priority that exceeds that of the other terminals.

8. An apparatus (140) for communication of broadcast data from a transmitter (120) to a plurality of terminals(105) in a communication system (100), comprising:
means for determining (305) a maximum communication data rate for each of the plurality of terminals, the apparatus (140) being further **characterised by** comprising:
means for selecting (305) a broadcast communication data rate greater than a lowest value of the determined maximum communication data rates; and
means for transmitting (120, 110) the broadcast data at the selected broadcast communication data rate, wherein said means for selecting (305) the broadcast communication data rate greater than the lowest value of the determined maximum communication data rates excludes a predetermined percentage of the plurality of terminals from receiving the broadcast data.

9. The apparatus of claim 8, further comprising:
means for repeating (305) said determining the maximum communication data rate and said selecting the broadcast communication data rate periodically.

10. The apparatus of claim 8, wherein said means for determining comprises:
means for obtaining (305) a plurality of communication data rate requests from each of the plurality of terminals for the determining the maximum communication data rate.

11. The apparatus of claim 8, further comprising:
means for determining (305) if at least one of the plurality of terminals in the predetermined percentage of terminals has an indicator associated therewith that indicates a higher priority that one terminal has with respect to the plurality of terminals ; and
means for transmitting (120,110) the broadcast data at the lowest value of the determined maximum data communication rates.

12. The apparatus of Claim 8 comprising:
means for transmitting (120, 100) data at a first communication data rate to the plurality of terminals;
means for determining (305) a second communication data rate for the transmitter, said second communication data rate being selected so that a predetermined number of the plurality of terminals are excluded from receiving the data from the transmitter at the second communication data rate; and
means for transmitting (120, 110) the data at the second communication data rate.

13. The apparatus of claim 8, further comprising:
means for obtaining (305) a plurality of communication data rate requests from each of the plurality of terminals, said communication data rate requests each respectively indicating a maximum communication data rate in which the terminals are able to receive data from the transmitter; and
means for selecting (305) the second communication data rate based at least in part upon the plurality of communication data rate requests obtained from each of the plurality of terminals.

14. The apparatus of claim 8, further comprising:
means for assigning (305) an indicator to at least one of the plurality of terminals, said indicator indicating a priority that one terminal has with respect to the plurality of terminals ; and
means for transmitting (120, 110) the data to the plurality of terminals using said first communication data rate providing that at least one terminal is unable to receive the data at the second communication data rate and has an assigned indicator with a priority that exceeds that of the other terminals.

15. A wireless communication system, comprising the apparatus of any of Claims 8 to 14.

## Patentansprüche

1. Ein Verfahren zur Kommunikation von Broadcast- bzw. Ausstrahlungsdaten von einem Sender zu einer Vielzahl von Terminals in einem Kommunikationssystem, wobei das Verfahren Folgendes aufweist:
Bestimmen einer maximalen Kommunikationsdatenrate für jedes von der Vielzahl von Terminals, wobei das Verfahren ferner **gekennzeichnet ist durch**:
Auswählen einer Broadcast-Kommunikationsdatenrate, die größer ist als ein niedrigster Wert von den bestimmten maximalen Kommunikationsdatenraten; und
Senden der Broadcast-Daten mit der ausgewählten Broadcast-Kommunikationsdatenrate, die größer ist als die maximale Kommunikationsdatenrate von wenigstens einem von der Vielzahl von Terminals, wobei das Auswählen der Broadcast-Kommunikationsdatenrate, die größer als der niedrigste Wert von den bestimmten maximalen Kommunikationsdatenraten ist, einen vorherbestimmten Prozentsatz von der Vielzahl von Terminals vom Empfangen der Broadcast-Daten ausschließt.

2. Verfahren nach Anspruch 1, wobei das Verfahren ferner Folgendes aufweist:
Wiederholen des Bestimmens der maximalen Kommunikationsdatenrate und des Auswählens der Broadcast-Kommunikationsdatenrate und zwar periodisch.

3. Verfahren nach Anspruch 1, wobei das Bestimmen Folgendes aufweist:
Erlangen bzw. Erhalten einer Vielzahl von Kommunikationsdatenratenanforderungen von jedem von der Vielzahl von Terminals für das Bestimmten der maximalen Kommunikationsdatenrate.

4. Verfahren nach Anspruch 1, wobei das Verfahren ferner Folgendes aufweist:
Bestimmen, ob wenigstens eines von der Vielzahl von Terminals in dem vorherbestimmten Prozentsatz von Terminals einen damit assoziierten Indikator besitzt, welcher eine höhere Priorität anzeigt, die ein Terminal mit Bezug auf die Vielzahl von Terminals besitzt; und
Senden der Broadcast-Daten mit dem niedrigsten Wert von den bestimmten maximalen Datenkommunikationsraten.

5. Verfahren nach Anspruch 1, wobei das Verfahren ferner Folgendes aufweist:
Senden von Daten mit einer ersten Kommunikationsdatenrate an die Vielzahl von Terminals;
Bestimmen einer zweiten Kommunikationsdatenrate für den Sender, wobei die zweite Kommunikationsdatenrate derart ausgewählt wird, so dass eine vorherbestimmte Anzahl von der Vielzahl von Terminals vom Empfangen der Daten von dem Sender mit der zweiten Kommunikationsdatenrate ausgenommen sind; und
Senden der Daten mit der zweiten Kommunikationsdatenrate.

6. Verfahren nach Anspruch 5, wobei das Verfahren ferner Folgendes aufweist:
Erhalten einer Vielzahl von Kommunikationsdatenratenanfragen bzw. - anforderungen von jedem von der Vielzahl von Terminals, wobei die Kommunikationsdatenratenanforderungen jeweils entsprechend eine maximale Kommunikationsdatenrate anzeigen, mit der die Terminals fähig sind, Daten von dem Sender zu empfangen; und
Auswählen der zweiten Kommunikationsdatenrate basierend wenigstens teilweise auf der Vielzahl von Kommunikationsdatenratenanforderungen, die von jedem von der Vielzahl von Terminals erhalten werden.

7. Verfahren nach Anspruch 5, wobei das Verfahren ferner Folgendes aufweist:
Zuweisen eines Indikators an wenigstens eines von der Vielzahl von Terminals, wobei der Indikator eine Priorität anzeigt, die ein Terminal mit Bezug auf die Vielzahl von Terminals besitzt; und
Senden der Daten an die Vielzahl von Terminals unter Verwendung der ersten Kommunikationsdatenrate sofern wenigstens ein Terminal unfähig ist die Daten mit der zweiten Kommunikationsdatenrate zu empfangen und einen zugewiesenen Indikator besitzt mit einer Priorität, die jene von den anderen Terminals übersteigt.

8. Eine Vorrichtung (140) zur Kommunikation von Ausstrahlungs- bzw. Broadcast-Daten von einem Sender (120) an eine Vielzahl von Terminals (105) in einem Kommunikationssystem (100), wobei die Vorrichtung Folgendes aufweist:
Mittel zum Bestimmen (305) einer maximalen Kommunikationsdatenrate für jedes von der Vielzahl von Terminals, wobei die Vorrichtung (140) ferner **gekennzeichnet ist dadurch** dass sie Folgendes aufweist:
Mittel zum Auswählen (305) einer Broadcast-Kommunikationsdatenrate, die größer ist als ein niedrigster Wert von den bestimmten maximalen Kommunikationsdatenraten; und
Mittel zum Senden (120, 110) der Broadcast-Daten mit der ausgewählten Broadcast-Kommunikationsdatenrate, wobei die Mittel zum Auswählen (305) der Broadcast-Kommunikationsdatenrate, die größer ist als der niedrigste Wert von den bestimmten maximalen Kommunikationsdatenraten einen vorherbestimmten Prozentsatz von der Vielzahl von Terminals vom Empfangen der Broadcast-Daten ausschließt.

9. Vorrichtung nach Anspruch 8, wobei die Vorrichtung Folgendes aufweist:
Mittel zum Wiederholen (305) des Bestimmens der maximalen Kommunikationsdatenrate und des Auswählens der Broadcast-Kommunikationsdatenrate und zwar periodisch.

10. Vorrichtung nach Anspruch 8, wobei die Mittel zum Bestimmen Folgendes aufweisen:
Mittel zum Erhalten (305) einer Vielzahl von Kommunikationsdatenratenanforderungen von jedem von der Vielzahl von Terminals für das Bestimmen der maximalen Kommunikationsdatenrate.

11. Vorrichtung nach Anspruch 8, wobei die Vorrichtung ferner Folgendes aufweist:
Mittel zum Bestimmen (305), falls wenigstens eines von der Vielzahl von Terminals in dem vorherbestimmten Prozentsatz von Terminals einen damit assoziierten Indikator besitzt, der eine höhere Priorität anzeigt, die ein Terminal mit Bezug auf die Vielzahl von Terminals besitzt; und
Mittel zum Senden (120, 110) der Broadcast-Daten mit dem niedrigsten Wert von den bestimmten maximalen Datenkommunikationsraten.

12. Vorrichtung nach Anspruch 8, wobei die Vorrichtung Folgendes aufweist:
Mittel zum Senden (120, 110) von Daten mit einer ersten Kommunikationsdatenrate an die Vielzahl von Terminals;
Mittle zum Bestimmen (305) einen zweiten Kommunikationsdatenrate für den Sender, wobei die zweite Kommunikationsdatenrate derart ausgewählt wird, dass eine vorherbestimmte Anzahl von der Vielzahl von Terminals vom Empfangen der Daten von dem Sender mit der zweiten Kommunikationsdatenrate ausgenommen sind; und
Mittel zum Senden (120, 110) der Daten mit der zweiten Kommunikationsdatenrate.

13. Vorrichtung nach Anspruch 8, wobei die Vorrichtung ferner Folgendes aufweist:
Mittel zum Erhalten (305) einer Vielzahl von Kommunikationsdatenratenanforderungen von jedem von der Vielzahl von Terminals, wobei die Kommunikationsdatenratenanforderungen jeweils entsprechend eine maximale Kommunikationsdatenrate anzeigen, mit der die Terminals fähig sind Daten von dem Sender zu empfangen; und
Mittel zum Auswählen (305) der zweiten Kommunikationsdatenrate basierend wenigstens teilweise auf der Vielzahl von Kommunikationsdatenratenanforderungen die von jedem von der Vielzahl von Terminals erhalten werden.

14. Vorrichtung nach Anspruch 8, wobei die Vorrichtung ferner Folgendes aufweist:
Mittel zum Zuweisen (305) eines Indikators an wenigstens eines von der Vielzahl von Terminals, wobei der Indikator eine Priorität anzeigt, die ein Terminal mit Bezug auf die Vielzahl von Terminals besitzt; und
Mittel zum Senden (120, 110) der Daten an die Vielzahl von Terminals unter Verwendung der ersten Kommunikationsdatenrate, sofern wenigstens ein Terminal unfähig ist die Daten mit der zweiten Kommunikationsdatenrate zu empfangen und einen zugewiesenen Indikator mit einer Priorität besitzt, die jene von den anderen Terminals übersteigt.

15. Ein drahtloses Kommunikationssystem, das die Vorrichtung nach irgendeinem der Ansprüche 8 bis 14 aufweist.

## Revendications

1. Procédé de communication de données en diffusion à partir d'un émetteur vers une pluralité de terminaux dans un système de communication, comprenant les étapes suivantes :
détermination d'un débit de données de communication maximum pour chacun de la pluralité de terminaux, le procédé étant en outre **caractérisé par** les étapes suivantes :
sélection d'un débit de données de communication en diffusion supérieur à la valeur la plus petite des débits de données de communication maximum déterminés ; et
transmission des données en diffusion au débit de données de communication en diffusion sélectionné supérieur au débit de données de communication maximum d'au moins un de la pluralité de terminaux, ladite sélection du débit de données de communication en diffusion supérieur à la valeur la plus faible des débits de données de communication maximum déterminés excluant un pourcentage prédéterminé de la pluralité de terminaux de la réception des données diffusées.

2. Procédé selon la revendication 1, comprenant en outre la répétition de la détermination du débit de données de communication maximum et la sélection du débit de données de communication en diffusion périodiquement.

3. Procédé selon la revendication 1, dans lequel la détermination comprend l'obtention d'une pluralité de requêtes de débit de données de communication à partir de chacun de la pluralité de terminaux pour la détermination du débit de données de communication maximum.

4. Procédé selon la revendication 1, comprenant en outre :
déterminer si au moins un de la pluralité de terminaux dans le pourcentage prédéterminé de terminaux comporte un indicateur associé qui indique une priorité supérieure qu'un certain terminal possède par rapport à la pluralité de terminaux ; et
transmission des données en diffusion à la valeur la plus faible des débits de données de communication maximum déterminés.

5. Procédé selon la revendication 1, comprenant en outre :
transmission de données à un premier débit de données de communication vers la pluralité de terminaux ;
détermination d'un deuxième débit de données de communication pour l'émetteur, le deuxième débit de données de communication étant sélectionné de sorte qu'un nombre prédéterminé de la pluralité de terminaux est exclu de la réception des données provenant de l'émetteur au deuxième débit de données de communication ; et
transmission des données au deuxième débit de données de communication.

6. Procédé selon la revendication 5, comprenant en outre :
obtention d'une pluralité de requêtes de débit de données de communication à partir de chacun de la pluralité de terminaux, les requêtes de débit de données de communication indiquant chacune respectivement un débit de données de communication maximum auquel les terminaux sont capables de recevoir des données provenant de l'émetteur ; et
sélection du deuxième débit de données de communication en fonction au moins en partie de la pluralité de requêtes de débit de données de communication obtenues à partir de chacun de la pluralité de terminaux.

7. Procédé selon la revendication 5, comprenant en outre :
affectation d'un indicateur à au moins un de la pluralité de terminaux, l'indicateur indiquant une priorité qu'un certain terminal possède par rapport à la pluralité de terminaux ; et
transmission des données vers la pluralité de terminaux en utilisant le premier débit de données de communication pourvu qu'au moins un terminal soit incapable de recevoir les données au deuxième débit de données de communication et comporte un indicateur affecté ayant une priorité qui dépasse celle des autres terminaux.

8. Dispositif (140) pour la communication de données en diffusion à partir d'un émetteur (120) vers une pluralité de terminaux (105) dans un système de communication (100), comprenant :
des moyens de détermination (305) d'un débit de données de communication maximum pour chacun de la pluralité de terminaux, le dispositif (140) étant en outre **caractérisé en ce qu'**il comprend :
des moyens de sélection (305) d'un débit de données de communication en diffusion supérieur à la valeur la plus faible des débits de données de communication maximum déterminés ; et
des moyens de transmission (120, 110) des données en diffusion au débit de données de communication en diffusion sélectionné, les moyens de sélection (305) du débit de données de communication en diffusion supérieur à la valeur la plus faible des débits de données de communication maximum déterminés excluant un pourcentage prédéterminé de la pluralité de terminaux de la réception des données diffusées.

9. Dispositif selon la revendication 8, comprenant en outre des moyens de répétition (305) de la détermination du débit de données de communication maximum et de la sélection du débit de données de communication en diffusion périodiquement.

10. Dispositif selon la revendication 8, dans lequel les moyens de détermination comprennent des moyens d'obtention (305) d'une pluralité de requêtes de débit de données de communication à partir de chacun de la pluralité de terminaux pour la détermination du débit de données de communication maximum.

11. Dispositif selon la revendication 8, comprenant en outre :
des moyens pour déterminer (305) si au moins un de la pluralité de terminaux dans le pourcentage prédéterminé de terminaux comporte un indicateur associé qui indique une priorité supérieure qu'un certain terminal possède par rapport à la pluralité de terminaux ; et
des moyens de transmission (120, 110) des données en diffusion à la valeur la plus faible des débits de données de communication maximum déterminés.

12. Dispositif selon la revendication 8, comprenant :
des moyens de transmission (120, 100) de données à un premier débit de données de communication vers la pluralité de terminaux ;
des moyens de détermination (305) d'un deuxième débit de données de communication pour l'émetteur, le deuxième débit de données de communication étant sélectionné de sorte qu'un nombre prédéterminé de la pluralité de terminaux est exclu de la réception des données provenant de l'émetteur au deuxième débit de données de communication ; et
des moyens de transmission (120, 110) des données au deuxième débit de données de communication.

13. Dispositif selon la revendication 8, comprenant en outre :
des moyens d'obtention (305) d'une pluralité de requêtes de débit de données de communication à partir de chacun de la pluralité de terminaux, les requêtes de débit de données de communication indiquant chacune respectivement un débit de données de communication maximum auquel les terminaux sont capables de recevoir des données provenant de l'émetteur ; et
des moyens de sélection (305) du deuxième débit de données de communication en fonction au moins en partie de la pluralité de requêtes de débit de données de communication obtenues à partir de chacun de la pluralité de terminaux.

14. Dispositif selon la revendication 8, comprenant en outre :
des moyens d'affectation (305) d'un indicateur à au moins un de la pluralité de terminaux, l'indicateur indiquant une priorité qu'un terminal possède par rapport à la pluralité de terminaux ; et
des moyens de transmission (120, 110) des données vers la pluralité de terminaux en utilisant le premier débit de données de communication pourvu qu'au moins un terminal soit incapable de recevoir les données au deuxième débit de données de communication et comporte un indicateur affecté avec une priorité qui dépasse celle des autres terminaux.

15. Système de communication sans fil, comprenant le dispositif selon l'une quelconque des revendications 8 à 14.
